# FASCICULE DE BREVET EUROPEEN

(11) **EP 2 900 511 B1**
(45) Date de publication et mention de la délivrance du brevet: **18.01.2017**
(21) Numéro de dépôt: 13763106.5
(22) Date de dépôt: 19.09.2013
(51) Int. Cl.: B60K 17/356, B60K 17/36, B60K 17/10

(54) **VÉHICULE À ASSISTANCE HYDRAULIQUE PAR TRANSMISSION DU COUPLE D'UN ESSIEU MENANT VERS UN ESSIEU MENÉ**
FAHRZEUG MIT HYDRAULISCHER UNTERSTÜTZUNG DURCH ÜBERTRAGUNG DES DREHMOMENTES VON EINER ANTRIEBSACHSE ZUR EINER ANGETRIEBENEN ACHSE
VEHICLE WITH HYDRAULIC ASSISTANCE BY TRANSMITTING TORQUE FROM A DRIVING AXLE TO A DRIVEN AXLE

(30) Priorité: 28.09.2012 FR 1259191
(43) Date de publication de la demande: 05.08.2015
(73) Titulaire: Poclain Hydraulics Industrie, 60410 Verberie (FR)
(72) Inventeur: HEREN, Jean, F-60410 Verberie (FR); D'HERSIGNERIE, Cyrille, F-60410 Verberie (FR); ALBERT, Laurent, F-60410 Verberie (FR); LAMBEY, Julien, F-60410 Verberie (FR); RECOURA, Clément, F-60410 Verberie (FR); GOUZOU, Christophe, F-60410 Verberie (FR)
(74) Mandataire: Regimbeau
(86) Numéro de dépôt international: PCT/EP2013/069519
(87) Numéro de publication internationale: WO 2014/048841

(56) Documents cités:
- EP-A1- 2 193 951
- DE-A1- 19 510 046
- DE-A1- 19 823 508
- DE-A1-102011 118 111
- FR-A1- 2 621 280
- GB-A- 2 229 977
- JP-A- S60 139 533

## Description

### DOMAINE TECHNIQUE GENERAL

La présente invention concerne le domaine des véhicules comprenant une assistance hydraulique, typiquement des véhicules pouvant passer d'une configuration deux roues motrices à une transmission intégrale.

### ETAT DE L'ART

On connaît les véhicules munis d'une assistance hydraulique pouvant être enclenchée sélectivement selon les conditions d'entrainement souhaitées pour réaliser l'entrainement de tout ou parties des roues.

De tels véhicules comprennent de manière conventionnelle un moteur primaire, par exemple un moteur thermique, auquel peut être relié un premier appareil hydraulique ayant un fonctionnement de pompe, afin d'alimenter des moteurs hydrauliques qui sont typiquement montés sur les roues pour les entrainer. Le premier moteur hydraulique fonctionnant en pompe est typiquement couplé à une prise de force du moteur primaire ou à la boîte de vitesse du véhicule au moyen d'un embrayage permettant de mettre en service ou non l'assistance hydraulique du véhicule.

De tels montages posent plusieurs problématiques ; ils nécessitent de multiples appareils hydrauliques et embrayages, et imposent des rapports de réduction importants.

Le document FR 2 621 280 décrit un véhicule selon le préambule de la revendication 1.

### PRESENTATION DE L'INVENTION

La présente invention vise à proposer un véhicule muni d'une assistance hydraulique ne présentant pas cette problématique.

A cet effet, l'invention propose un véhicule selon la revendication 1.

En variante, l'essieu mené comprend un différentiel définissant ainsi deux demi-essieux, ledit différentiel comprenant un boitier de différentiel muni de pignons de boitier adaptés pour coopérer avec des pignons liés chacun à un demi-essieu de sortie sur lesquels sont montées les roues, la rotation du boitier permettant d'entrainer en rotation lesdits demi-essieux de sortie à des vitesses distinctes, le moteur hydraulique comprenant un rotor et un stator, le stator étant monté fixe par rapport au châssis et le rotor étant lié en rotation au boitier du différentiel, chacun desdits moteurs et pompes hydrauliques est relié directement audit boitier de différentiel sans l'intermédiaire d'un embrayage.

La pompe et le moteur hydraulique sont typiquement des appareils hydrauliques à pistons radiaux rétractables et came multilobes, pouvant alterner entre une configuration de service et une configuration de roue libre dans laquelle ils ont une cylindrée nulle.

Selon un mode de réalisation particulier, la pompe et le moteur hydraulique sont des appareils hydrauliques à pistons radiaux comprenant chacun un carter, un arbre, une came multilobes et un bloc cylindres, lesdits appareils hydrauliques comprenant chacun deux ensembles mobiles en rotation l'un par rapport à l'autre :
- un premier ensemble défini par le carter, et
- un second ensemble défini par l'arbre, lesdits premier et second ensembles étant libres en rotation l'un par rapport à l'autre,
le bloc cylindres étant monté libre en rotation par rapport auxdits premier et second ensembles la came étant liée en rotation à l'un ou l'autre de ces ensembles, chacun desdits appareils hydrauliques comprenant en outre un actionneur permettant de réaliser de manière sélective une immobilisation du bloc cylindres par rapport à l'autre desdits premier ou second ensembles, de sorte que le bloc cylindres et la came soient chacun liés en rotation à un ensemble distinct, ce qui réalise la mise en service de l'appareil hydraulique.

Selon un mode de réalisation particulier, lesdits essieux menant et mené forment un ensemble autonome hydrauliquement sans connexion hydraulique avec d'autres sections dudit véhicule à l'exception d'une pompe de gavage.

Selon un mode de réalisation particulier, ledit véhicule comprend en outre un essieu directeur mené dans lequel l'essieu mené comprenant le moteur hydraulique est un essieu relevable comprenant un actionneur adapté pour faire varier sa hauteur par rapport au sol.

Selon un mode de réalisation particulier, ledit véhicule comprend un essieu menant et N-1 essieux menés avec N entier naturel supérieur ou égal à 2, chacun desdits essieux étant muni d'un appareil hydraulique reliés entre eux de manière à ce que les appareils hydrauliques des essieux menés soient montés en parallèle par rapport à l'appareil hydraulique de l'essieu menant,
lesdits N appareils hydrauliques étant configurés de sorte que
- la cylindrée de l'appareil hydraulique monté sur l'essieu menant soit égale à 1+(NxE) et
- la cylindrée de chacun des appareils hydrauliques des essieux menés soit égale à 1/(N-1),
où E représentant la valeur des pertes et fuites estimées pour un appareil hydraulique monté sur un essieu mené.

Le véhicule peut en outre comprendre un calculateur adapté pour, en fonction des conditions de déplacement du véhicule, définir une valeur seuil telle que lorsque la vitesse de déplacement du véhicule est inférieure ou égale à ladite valeur seuil, le ou les moteur(s) et la ou les pompe(s) hydrauliques soient mis en service de manière à réaliser une assistance hydraulique sur un ou plusieurs essieux du véhicule, et que lorsque la vitesse de déplacement du véhicule est supérieure à ladite valeur seuil, l'assistance hydraulique soient désengagée.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- la figure 1 présente schématiquement un exemple de circuit d'assistance pour un véhicule selon un aspect de l'invention,
- la figure 2 présente un exemple d'intégration du circuit de gavage pour un tel circuit d'assistance,
- la figure 3 présente une autre variante d'exemple de circuit d'assistance selon un aspect de l'invention,
- la figure 4 présente un autre exemple de mode de réalisation d'un circuit d'assistance selon un aspect de l'invention,
- les figures 5 et 6 présentent un exemple d'utilisation d'un kit d'assistance selon un aspect de l'invention.

Sur l'ensemble des figures, les éléments communs sont repérés par des références numériques identiques.

### DESCRIPTION DETAILLEE

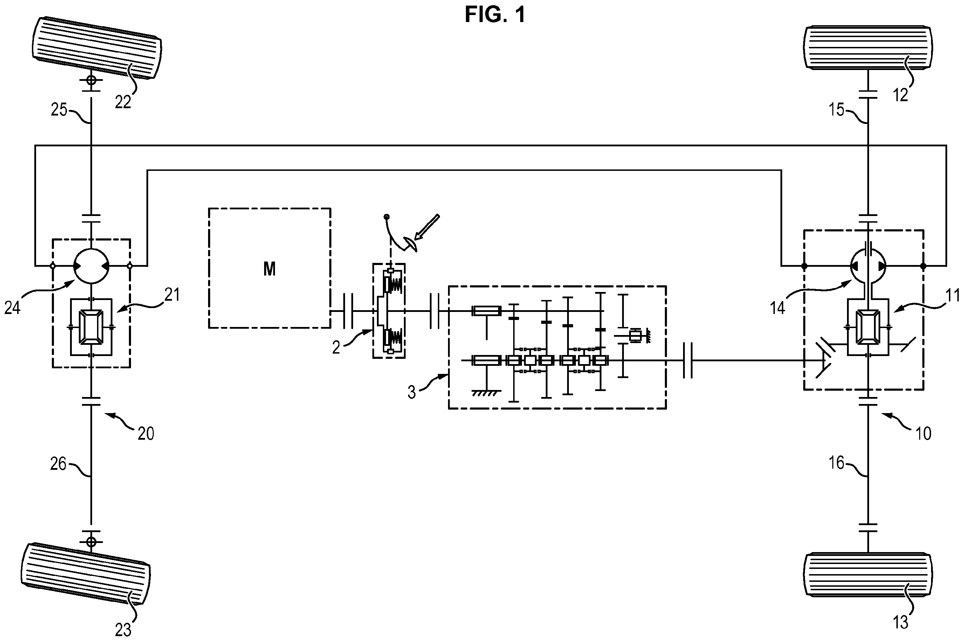

La figure 1 présente schématiquement un exemple de circuit d'assistance selon un aspect de l'invention.
On représente schématiquement sur cette figure une structure de véhicule comprenant un châssis, un essieu menant 10 et un essieu mené 20, chacun des essieux portant deux roues, respectivement 12, 13, 22 et 23.
L'essieu menant 10 est lié à un moteur primaire M, typiquement un moteur thermique, par l'intermédiaire d'un embrayage 2 et d'une boîte de vitesse 3 assurant ainsi son entrainement.

Dans le mode de réalisation représenté, chacun des essieux menant 10 et mené 20 comprennent un différentiel, respectivement 11 et 21, permettant de faire tourner les roues d'un même essieu à des vitesses de rotation distinctes, notamment en cas de virage ou de perte d'adhérence de l'une des roues.

La structure d'un différentiel est bien connue et ne sera pas reprise en détail ici. On comprend toutefois bien le fonctionnement d'un tel appareil, qui permet de transmettre un couple d'entrée appliqué à un boitier de différentiel à deux arbres, en l'occurrence deux demi-essieux via des pignons, en permettant aux deux demi-essieux de tourner à des vitesses distinctes. La vitesse de rotation du boîtier du différentiel est égale à la moyenne entre les vitesses de rotation des deux demi-essieux.

Dans le mode de réalisation représenté, chacun des essieux comprend un appareil hydraulique. L'essieu menant 10 comprend un premier appareil hydraulique 14 lié d'une part au châssis, et d'autre part à l'essieu menant 10, et l'essieu mené 20 comprend un second appareil hydraulique 24 lié d'une part au châssis, et d'autre part à l'essieu mené 20.
Dans la suite du texte, on se référera à un appareil hydraulique monté sur un essieu donné, étant alors entendu que le rotor de cet appareil hydraulique est lié en rotation à ce essieu, tandis que le stator de l'appareil hydraulique est lié au châssis fixe du véhicule.
Ces deux appareils hydrauliques 14 et 24 étant liés par des conduits hydrauliques de manière à ce que l'un fonctionne en tant que pompe de manière à générer un débit et ainsi alimente l'autre qui fonctionne alors en tant que moteur.

Ces deux appareils hydrauliques 14 et 24 sont typiquement des appareils hydrauliques réversibles de type à pistons radiaux bien connus de l'homme de l'art, pouvant alterner entre une configuration de roue libre et une configuration de service, par exemple par rétractation des pistons dans leurs logements respectifs, ou par désengagement du bloc-cylindres de manière à avoir une cylindrée nulle.

Les appareils hydrauliques peuvent présenter un fonctionnement de pompe ou de moteur, selon la nature de leur alimentation. Un appareil hydraulique est réversible, et peut donc alterner entre ces deux fonctionnements si la nature de son alimentation varie.
Un appareil hydraulique auquel on applique un couple en entrée, par exemple au moyen d'un arbre, va ainsi générer un débit et donc fonctionner en tant que pompe.
A l'inverse, un appareil hydraulique auquel on applique un débit va générer un couple, et fonctionner en tant que moteur.

Un exemple de structure d'appareil hydraulique pouvant être mis en service ou désengagé par engagement ou désengagement du bloc cylindres comprend deux ensembles mobiles en rotation l'un par rapport à l'autre :
- un premier ensemble défini par le carter, et
- un second ensemble défini par l'arbre, lesdits premier et second ensembles étant libres en rotation l'un par rapport à l'autre.
Le bloc cylindres est monté libre en rotation par rapport auxdits premier et second ensembles. La came est liée en rotation à l'un ou l'autre de ces ensembles. Un actionneur permet de réaliser de manière sélective une immobilisation du bloc cylindres par rapport à l'autre desdits premier ou second ensembles, de sorte que le bloc cylindres et la came soient chacun liés en rotation à un ensemble distinct, ce qui réalise la mise en service de l'appareil hydraulique.

Les deux appareils hydrauliques 14 et 24 étant chacun montés sur un essieu, ils tournent à une vitesse intermédiaire entre la vitesse des roues de cet essieu, la vitesse entre les roues d'un même essieu pouvant être différente du fait du différentiel.
Plus précisément, en considérant l'essieu menant 10 ; le différentiel 11 divise cet essieu menant 10 en deux demi-essieux 15 et 16, sur lesquels sont respectivement montées les roues 12 et 13.
Le premier appareil hydraulique 14 est lié en rotation au boitier du différentiel 11.

De la même manière, l'essieu mené 20 est divisé en deux demi-essieux 25 et 26 par le différentiel 21, ces essieux portant respectivement les roues 22 et 23. Le second appareil hydraulique 24 est lié en rotation au boitier du différentiel 21 de cet essieu mené 20.

En variante, l'essieu mené 20 peut être formé de demi-essieux distincts, non liés par un différentiel, portant chacun une des roues 22 et 23. Chacune des roues 22 et 23 est alors équipée d'un moteur hydraulique distinct, communément qualifié de moteur de roue. Ces moteurs hydrauliques sont alimentés par le premier appareil hydraulique 14, typiquement selon un montage en série ou en parallèle.

Les appareils hydrauliques 14 et 24 sont typiquement des appareils hydrauliques à pistons radiaux comprenant chacun :
- une glace de distribution et une came multilobes définissant un premier ensemble,
- un bloc cylindres définissant un second ensemble,
l'un desdits ensembles étant monté fixe en rotation par rapport au boitier de différentiel, et l'autre desdits ensembles étant monté tournant par rapport au boitier de différentiel de manière à permettre l'entrainement en rotation du boitier de différentiel par ledit appareil hydraulique.

Les deux appareils hydrauliques 14 et 24 sont typiquement à cylindrée fixe et ont avantageusement la même cylindrée, afin que les roues des différents essieux tournent à la même vitesse.
La cylindrée des appareils hydrauliques est toutefois adaptée afin de prendre en compte les pertes et fuites ; leurs cylindrées diffèrent donc par exemple de l'ordre de quelques pourcents.

Afin d'illustrer le fonctionnement, on considère la configuration dans laquelle le moteur primaire M entraine l'essieu menant 10, et les deux appareils hydrauliques sont en configuration de roue libre.

Seul l'essieu menant entraine les roues qui sont donc les seules roues motrices du véhicule.
Dans l'exemple présenté, en considérant que l'essieu mené 20 est l'essieu avant directeur, cette configuration est donc celle d'un véhicule à propulsion.

Afin de mettre en service l'assistance hydraulique, on réalise la mise en service des deux appareils hydrauliques 14 et 24, typiquement par sortie des pistons de leurs logements dans cas d'appareils hydrauliques à pistons radiaux rétractables.
Le premier appareil hydraulique 14 est alors entrainé par l'essieu menant 10, et plus particulièrement par le boitier du différentiel 11 de l'essieu menant 10 et fonctionne en tant que pompe hydraulique, pour délivrer un débit qui alimente le second appareil hydraulique 24 qui fonctionne alors en tant que moteur hydraulique, et entraine ainsi en rotation le boitier du différentiel 21 de l'essieu mené 20.
On obtient ainsi une transmission intégrale sur le véhicule, en prélevant un couple sur l'essieu menant 10 et en transmettant ce couple sur l'essieu mené 20 via les appareils hydrauliques 14 et 24.

A l'inverse, afin de désengager l'assistance hydraulique, il suffit de basculer les appareils hydrauliques 14 et 24 en configuration de roue libre, par exemple par rétractation de leurs pistons dans les logements respectifs de leurs blocs cylindres.

De plus, lors d'un freinage, un couple négatif est appliqué sur l'essieu menant 10. Le fonctionnement des appareils hydrauliques est alors inversé ; l'appareil hydraulique 14 de l'essieu 10 a un fonctionnement de moteur, tandis que l'appareil hydraulique 24 de l'essieu 20 a un fonctionnement de pompe, ce qui permet une synchronisation des essieux au freinage, par report du couple de freinage.

Le système comprend en outre typiquement une pompe de gavage associée à un circuit de gavage, afin notamment de compenser les pertes du circuit hydraulique.
La pompe de gavage peut alors être disposée de manière à être entraînée en rotation par l'arbre primaire de la boite de vitesse 3 du véhicule 1, ou par le moteur primaire M.

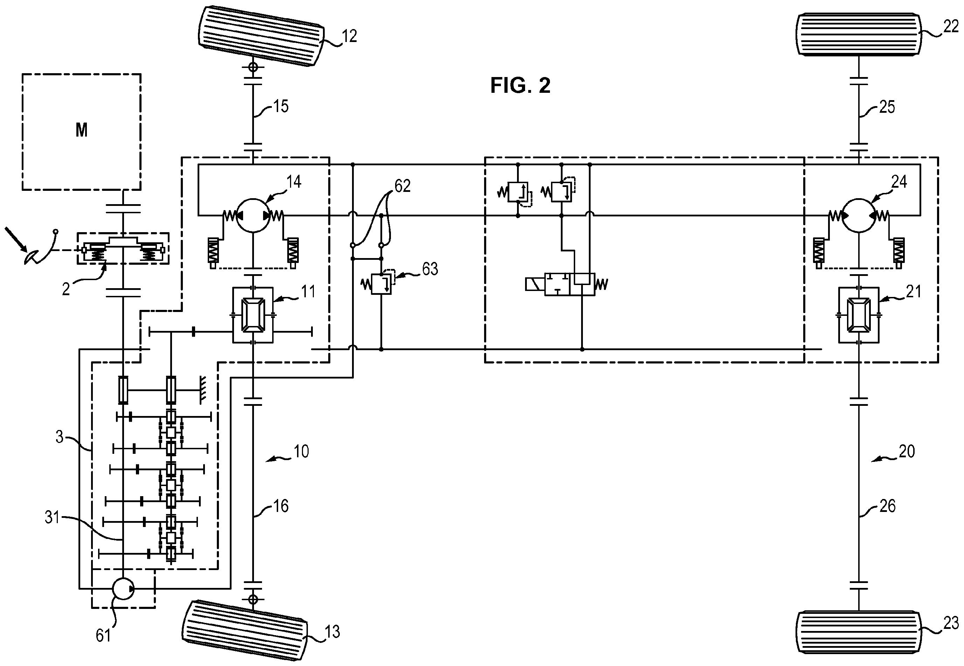

La figure 2 présente un exemple d'intégration du circuit de gavage pour le circuit d'assistance présenté sur la figure 1.
Cette figure présente une pompe de gavage 61 montée sur l'arbre primaire 31 de la boite de vitesse 3 du véhicule 1, la pompe de gavage 61 étant configurée de manière à prélever de l'huile dans un réservoir ou un carter, par exemple le carter de l'appareil hydraulique 14 de l'essieu 10, pour réaliser un gavage du circuit hydraulique reliant de l'appareil hydraulique 14 de l'essieu 10 et de l'appareil hydraulique 24 de l'essieu 20.
Le gavage est ici réalisé au moyen d'une structure connue de clapets anti-retour 62 adaptés pour injecter l'huile dans le circuit hydraulique, et d'un limiteur de pression 63 permettant d'évacuer un excès de pression par exemple lorsque le gavage du circuit n'est pas nécessaire.

Un tel montage de la pompe de gavage 61 sur l'arbre primaire 31 de la boite de vitesse 3 permet d'assurer un gavage continu du circuit hydraulique dès lors que le véhicule est en mouvement.

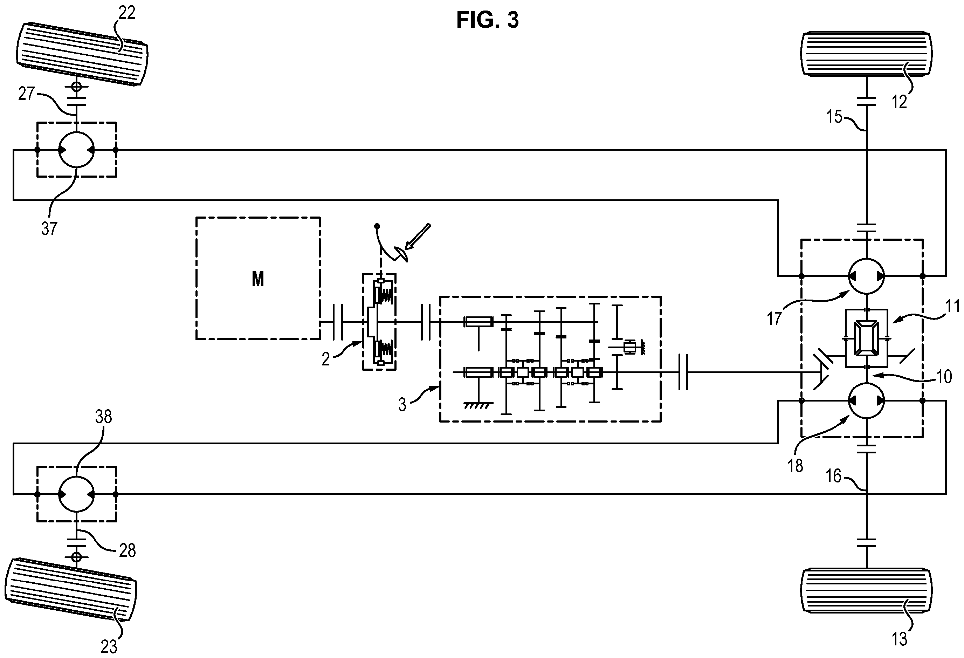

La figure 3 présente une autre variante d'exemple de circuit d'assistance selon un aspect de l'invention.
La structure présentée comprend un essieu menant 10 lié à un moteur primaire M via l'intermédiaire d'un embrayage 2 et d'une boite de vitesse 3 comme présenté précédemment.
L'essieu menant 10 est divisé par le différentiel 11 en deux demi-essieux 15 et 16, sur lesquels sont respectivement montées les roues 12 et 13

Dans ce mode de réalisation, les roues 22 et 23 sont chacune montées sur un demi-essieu mené distinct, respectivement 27 et 28.
Chacun des demi-essieux menant et mené comprend ici un appareil hydraulique.
Les demi-essieux 15 et 16 de l'essieu menant 10 comprennent chacun un appareil hydraulique, respectivement 17 et 18. Les demi-essieux menés 27 et 28 comprennent chacun un appareil hydraulique, respectivement 37 et 38, communément qualifié des moteurs de roue. Contrairement au mode de réalisation présenté sur la figure 1, les appareils hydrauliques ne sont ici pas nécessairement liés en rotation au boitier du différentiel de leur essieu associé, et la vitesse de rotation de chacun des appareils hydrauliques est identique à la vitesse de rotation de la roue à laquelle il est associé.

Les appareils hydrauliques sont reliés deux à deux, définissant ainsi deux couples d'appareils hydrauliques correspondant chacun à un côté du véhicule.
L'appareil hydraulique 17 est ainsi relié à l'appareil hydraulique 37, et l'appareil hydraulique 18 est relié à l'appareil hydraulique 38.

Comme pour le mode de réalisation de la figure 1, on considère ici à titre d'exemple que le moteur primaire M entraine l'essieu menant 10, et les quatre appareils hydrauliques 17, 18, 37, 38 sont en configuration de roue libre.
On peut alors passer ces appareils hydrauliques en configuration de service, pour réaliser une assistance hydraulique partielle ou totale sur le véhicule ; l'appareil hydraulique 17 fonctionne alors en pompe pour entrainer l'appareil hydraulique 37 qui fonctionne alors en moteur et entraine la roue 22, et l'appareil hydraulique 18 fonctionne alors en pompe pour entrainer l'appareil hydraulique 38 qui fonctionne alors en moteur et entraine la roue 23.

En variante, l'essieu menant 10 peut comprendre un appareil hydraulique unique lié en rotation au boitier du différentiel 11 de la même manière que sur la structure présentée sur la figure 1, cet appareil hydraulique étant relié à deux appareils hydrauliques 37 et 38 montés sur les deux demi-essieux arrières comme présenté sur la figure 3.
Les cylindrées des différents appareils hydrauliques sont adaptées en conséquence ; en considérant que l'appareil hydraulique unique de l'essieu menant 10 a une cylindrée égale à 1, chacun des appareils hydrauliques 37 et 38 a une cylindrée égale à 1/2, aux pertes et fuites près.

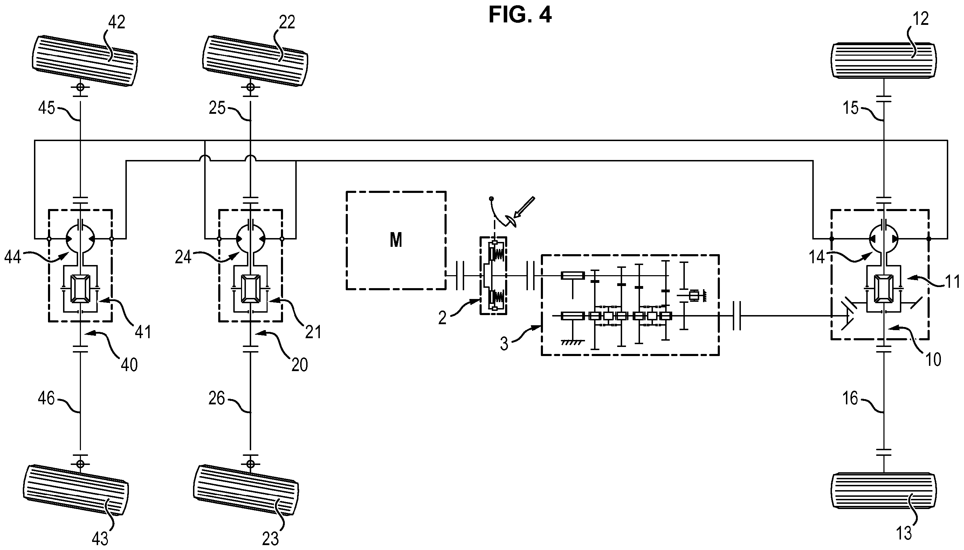

La structure présentée peut de plus être adaptée sur un véhicule ayant plus de deux essieux. Afin d'illustrer de telles variantes, on représente sur la figure 4 une variante du mode de réalisation de la figure 1, adapté à un véhicule ayant deux essieux menés.
On retrouve ainsi sur cette figure la structure présentée sur la figure 1, à laquelle s'ajoute un second essieu mené 40 similaire à l'essieu mené 20 présenté précédemment.
Tour comme l'essieu mené 20, le second essieu mené 40 comprend un différentiel 41 le divisant en deux demi-essieux 45 et 46 portant chacun une roue, respectivement 42 et 43. Un appareil hydraulique 44 est monté sur le second essieu 40, et lié en rotation au boitier du différentiel 41 du second essieu mené 40.

Les appareils hydrauliques 24 et 44 montés sur les essieux menés sont montés en parallèle. Ainsi, dans le cas où l'appareil hydraulique 14 de l'essieu menant 10 fonctionne en pompe et les deux appareils hydrauliques 24 et 44 fonctionnent en moteur, les admissions des appareils hydrauliques 24 et 44 sont toutes deux reliées au refoulement de l'appareil hydraulique 14, et les refoulements des appareils hydrauliques 24 et 44 sont tous deux reliés à l'admission de l'appareil hydraulique 14.

Les cylindrées des différents appareils hydrauliques sont adaptées en conséquence ; en considérant que l'appareil hydraulique 14 de l'essieu menant 10 a une cylindrée égale à 1, chacun des appareils hydrauliques 24 et 44 a une cylindrée égale à 1/2.

De manière plus générale, en considérant un montage avec un essieu menant et N-1 essieux menés comprenant chacun un appareil hydraulique, l'appareil hydraulique de l'essieu menant a une cylindrée égale à 1 + (NxE) et chacun des appareils hydrauliques des essieux menés a une cylindrée égale à 1/(N-1), E représentant la valeur des pertes et fuites estimées pour un appareil hydraulique monté sur un essieu mené.

Les appareils hydrauliques utilisés peuvent ainsi être à cylindrée variable pilotée de manière à ce que leurs cylindrées respectives soient adaptées de manière à ce que la somme des cylindrées des appareils hydrauliques fonctionnant en tant que pompe soit égale à la somme des cylindrées des appareils hydrauliques fonctionnant en tant que moteur aux pertes et fuites près, ou à cylindrée fixe.

La structure de circuit d'assistance hydraulique présentée trouve une application avantageuse sur les camions.
On connait les camions ayant par exemple trois essieux ; un essieu avant et deux essieux arrière. L'essieu avant est mené, tandis que les deux essieux arrière sont communément menant, une telle transmission avec deux essieux menant étant nécessaire dans certaines conditions d'utilisation, notamment en cas de neige, ou en cas de démarrage en pente.
Cependant, en dehors de ces conditions d'utilisation, une telle assistance est superflue, et une transmission simple avec un unique essieu menant est suffisante.

On peut alors exploiter la structure d'assistance présentée précédemment afin de réaliser une assistance hydraulique engagée de manière sélective.
On considère ainsi un camion ayant par exemple 6 ou 8 roues réparties sur 3 ou 4 essieux. Parmi ces essieux, seul un essieu « arrière », c'est-à-dire un essieu disposé à proximité du point d'attelage du camion à une remorque, est menant, entrainé par le moteur primaire du véhicule, par exemple un moteur thermique.
On dispose sur cet essieu menant un appareil hydraulique adapté pour fonctionner en tant que pompe comme présenté précédemment, que l'on couple avec un second appareil hydraulique adapté pour fonctionner en tant que moteur, disposé sur un autre essieu du véhicule, typiquement un second essieu arrière du véhicule, ces deux appareils hydrauliques étant reliés par un circuit hydraulique de manière à permettre un prélèvement du couple de l'essieu menant pour réaliser une assistance hydraulique sur un autre essieu.

On peut également réaliser une assistance sur plusieurs essieux, comme présenté précédemment notamment en référence à la figure 4.

L'assistance hydraulique est avantageusement couplée à un calculateur, configuré de manière à sélectivement engager ou désengager l'assistance hydraulique en fonction des conditions d'utilisation.
Par exemple, l'assistance hydraulique peut être configurée de manière à être engagée lorsque la vitesse du véhicule est inférieure ou égale à une valeur seuil, et à se désengager lorsque la vitesse du véhicule dépasse cette valeur seuil.
Le calculateur peut également prendre en compte l'inclinaison du véhicule, sa charge et la présence ou non d'un attelage.

La structure d'assistance hydraulique présentée permet ainsi de passer par exemple d'une configuration 6x2 à une configuration 6x4 ou 6x6, ou d'une configuration 8x2 à une configuration 8x4, 8x6 ou 8x8 lorsque les conditions d'utilisations le requièrent, et de désactiver l'assistance hydraulique lorsqu'elle devient superflue, ce qui évite des pertes de puissance.
La désignation NxM désigne un véhicule ayant N roues parmi lesquelles M sont des roues motrices.

La structure d'assistance hydraulique présentée peut également se décliner sous la forme d'un kit pouvant être adapté sur un véhicule existant, tel qu'un camion.
Un tel kit comprend alors deux essieux munis chacun d'un appareil hydrauliques reliés entre eux comme décrit précédemment, de sorte que l'association de l'un de ces appareils hydrauliques à un arbre d'entrée, par exemple d'un moteur primaire d'un véhicule entraine un fonctionnement de cet appareil hydraulique en pompe, qui alimente alors l'autre appareil hydraulique présentant un fonctionnement de moteur, et réalise ainsi une assistance hydraulique sur son essieu par prélèvement d'un couple appliqué à l'essieu de l'appareil hydraulique fonctionnant en tant que pompe.
Un tel kit forme un ensemble indépendant hydrauliquement ; le circuit hydraulique reliant les appareils hydrauliques est fermé et ne nécessite pas de composants hydrauliques additionnels, à l'exception éventuelle d'une pompe de gavage, ce qui permet un installation simplifiée sur un véhicule.

Un tel kit peut être monté sur un véhicule, par exemple en remplacement de deux ou plus de ses essieux existant.

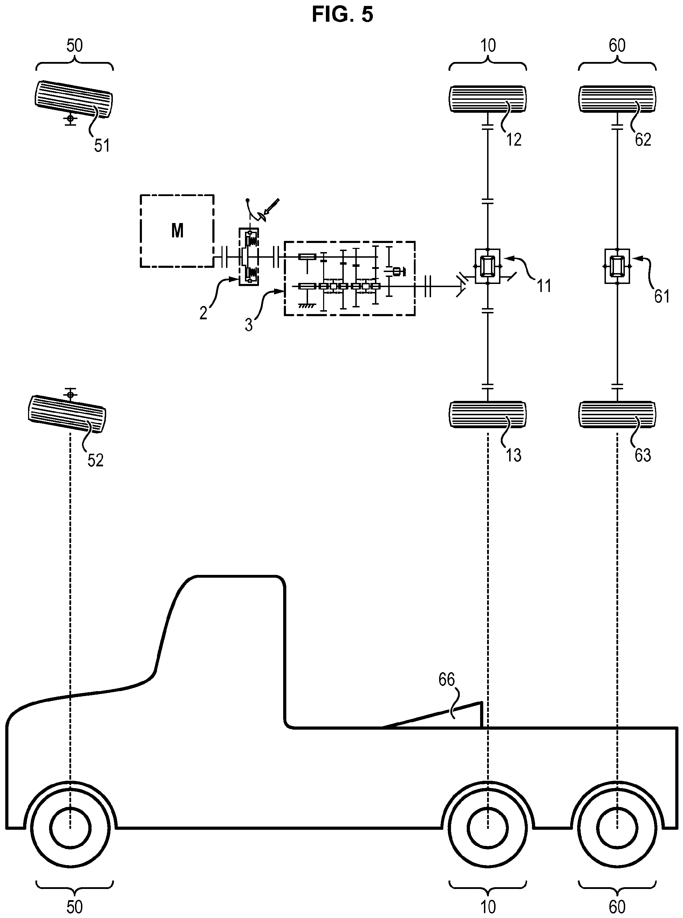

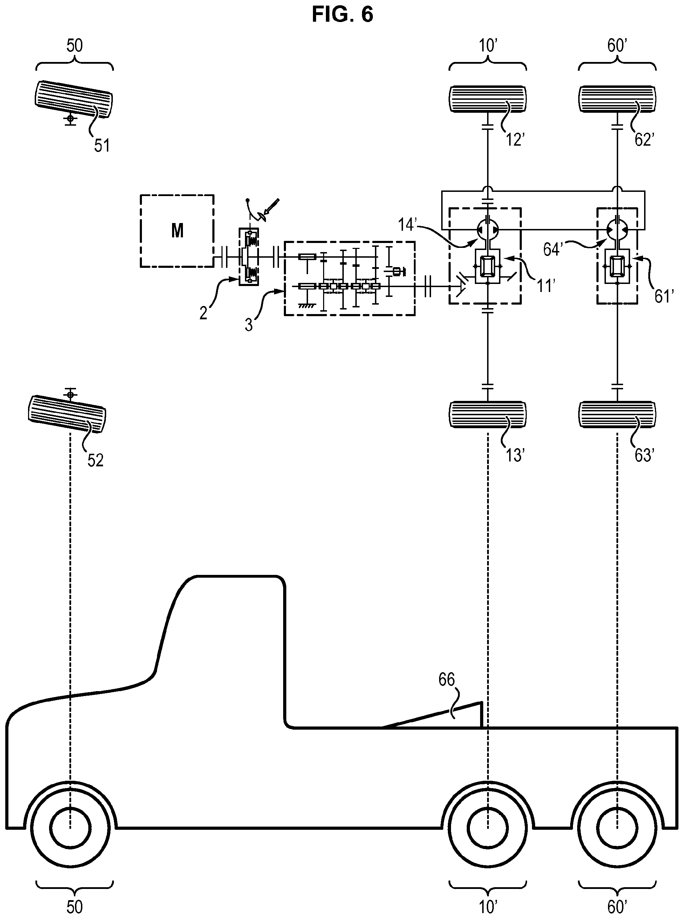

On présente sur les figures 5 et 6 un exemple d'application d'un tel kit.
La figure 5 présente une structure conventionnelle de camion à 6 roues départies sur 3 essieux :
- un essieu menant 10 comprenant un différentiel 11 entrainé en rotation par une boite de vitesse 3 couplée à un moteur primaire M via un embrayage 2,
- un essieu avant directeur 50 comprenant deux roues directrices 51 et 52,
- un essieu mené arrière 60 comprenant un différentiel 61 et deux roues 62 et 63.
Le camion comprend en outre un point d'ancrage 66 pour y associer une remorque ou un attelage, disposé sensiblement à proximité des essieux 10 et 60.
On comprend bien que cet exemple est purement illustratif, et qu'un tel kit peut être également adapté à un véhicule ayant un nombre distinct de roues et d'essieux.

La figure 6 illustre l'effet de l'utilisation d'un kit tel que décrit précédemment pour remplacer les essieux 10 et 60 du véhicule par des essieux munis d'appareils hydrauliques permettant de réaliser une assistance.
Les essieux 10 et 60 sont ainsi remplacés par des essieux 10' et 60' ; comprenant chacun un différentiel respectivement 11' et 61', deux roues, respectivement 12', 13', 62' et 63', ainsi qu'un appareil hydraulique, respectivement 14' et 64'.
Le fonctionnement est similaire au fonctionnement décrit précédemment par exemple en référence à la figure 1 avec les essieux 10 et 20 ; les appareils hydrauliques 14' et 64' permettent de prélever un couple sur l'essieu menant 10' entrainé par le moteur primaire M afin de réaliser une assistance sur l'essieu mené 60'.

Un véhicule existant peut ainsi être doté d'une assistance hydraulique sélective sur un ou plusieurs de ses essieux par utilisation d'un kit tel que présenté.

Un outre, l'essieu 60' ainsi muni d'une assistance hydraulique peut être un essieu de type relevable comprenant un actionneur permettant de faire varier sa hauteur par rapport au sol, permettant ainsi de modifier sa configuration et en particulier le fait que les roues de l'essieu soient ou non au contact du sol selon les conditions d'utilisation, permettant de réaliser des économies d'énergies lorsqu'un essieu additionnel n'est pas requis pour supporter la charge du véhicule.
Une structure avec essieu menant relevable est conventionnellement délicate à réaliser ; les transmissions mécaniques utilisées communément impliquent en effet des arbres fixes liant les essieux.
La structure proposée qui permet de réaliser une assistance hydraulique sur un essieu mené permet de s'affranchir de telles contraintes ; les liaisons et conduits employés pour l'appareil hydraulique disposé sur l'essieu mené 60' pour lequel on réalise une assistance pouvant être du type flexible hydraulique, et cet essieu mené 60' étant indépendant mécaniquement de l'essieu menant 10'.
On peut ainsi réaliser un essieu relevable menant, avantageux en termes d'économie d'énergie. De cette manière on peut combiner sur le véhicule et sur le même essieu les fonctions de double essieu de traction, de manière temporaire, et d'essieu relevable.

Dans les différents modes de réalisation, les essieux menant et mené peuvent former un ensemble autonome hydrauliquement sans connexion hydraulique avec d'autres sections dudit véhicule à l'exception éventuellement d'une pompe de gavage.

La structure de véhicule ainsi présentée permet de réaliser une assistance hydraulique, en prélevant un couple sur un essieu d'un véhicule et en transmettant ce couple sur un autre essieu sur lequel est réalisée l'assistance hydraulique.
Cette structure dans laquelle les appareils hydrauliques sont montés sur les essieux permet de conserver un rapport sensiblement égal à 1 entre la vitesse de rotation des roues et la vitesse de rotation des différents appareils hydrauliques, ce qui est avantageux pour des appareils hydrauliques à pistons radiaux qui fonctionnent à des vitesses de rotation faibles et génèrent un couple élevé.

De plus, l'utilisation d'appareils hydrauliques pouvant passer d'une configuration de roue libre à une configuration de service permet de réaliser cette structure sans embrayages pour différents appareils hydrauliques, contrairement aux structures conventionnelles dans lesquelles les appareils hydrauliques sont montés sur une prise de force d'un moteur ou sur un arbre de boîte de vitesse et nécessitent donc un embrayage supplémentaire pour réaliser leur mise en service sélective.

Les modes de réalisation présentés sur les figures 1 et 3 correspondent par exemple à une transmission de type propulsion, avec des roues directrices avant et des roues motrices arrière, pouvant basculer en transmission intégrale via l'assistance hydraulique.
On comprend bien que la structure présentée s'adapte également à des transmissions de type traction comprenant des roues avant motrices et directrices, ou avec des roues avant motrices et des roues arrière directrices, ou encore à une transmission de type propulsion avec des roues arrière motrices et directrices.

## Revendications

1. Véhicule comprenant un châssis, un essieu menant (10) et un essieu mené (20) liés chacun à des roues (12, 13, 22, 23), et un moteur primaire (M) entrainant en rotation ledit essieu menant (10), ledit véhicule comprenant en outre une pompe hydraulique (14) et un moteur hydraulique (24) configurés de manière à réaliser de manière sélective une assistance hydraulique pour l'entrainement des roues (12, 13) de l'essieu mené (20),
lesdits moteur (24) et pompe (14) hydrauliques étant montés respectivement sur l'essieu mené (20) et sur l'essieu menant (10), sont chacun liés en rotation d'une part au châssis, et d'autre part audit essieu mené (20) et menant (10) respectivement, et sont configurés de manière à ce que leur mise en service réalise un entrainement des roues de l'essieu mené (22, 23) par prélèvement du couple appliqué à l'essieu menant (10),
l'essieu menant (10) comprenant un différentiel (11) définissant ainsi deux demi-essieux, ledit différentiel comprenant un boitier de différentiel muni de pignons de boitier adaptés pour coopérer avec des pignons liés chacun à un demi-essieu de sortie sur lesquels sont montées les roues, la rotation du boitier permettant d'entrainer en rotation lesdits demi-essieux de sortie à des vitesses distinctes, la pompe (14) comprenant un rotor et un stator, le stator étant monté fixe par rapport au châssis et le rotor étant lié en rotation au boitier du différentiel (11),
**caractérisé en ce que** la pompe hydraulique (10) est entrainée en rotation à une vitesse égale à la vitesse moyenne des deux demi-essieux associés au différentiel (11) sur lequel elle est montée, et **en ce que** la pompe (14) et le moteur (24) hydrauliques sont des appareils hydrauliques réversibles.

2. Véhicule selon la revendication 1, dans lequel l'essieu mené (20) comprend un différentiel (21) définissant ainsi deux demi-essieux, ledit différentiel comprenant un boitier de différentiel muni de pignons de boitier adaptés pour coopérer avec des pignons liés chacun à un demi-essieu de sortie sur lesquels sont montées les roues, la rotation du boitier permettant d'entrainer en rotation lesdits demi-essieux de sortie à des vitesses distinctes, le moteur hydraulique (24) comprenant un rotor et un stator, le stator étant monté fixe par rapport au châssis et le rotor étant lié en rotation au boitier du différentiel (21),
chacun desdits moteurs et pompes hydrauliques est relié directement audit boitier de différentiel sans l'intermédiaire d'un embrayage.

3. Véhicule selon l'une des revendications 1 ou 2, dans lequel la pompe et le moteur hydraulique sont des appareils hydrauliques à pistons radiaux rétractables et came multilobes, pouvant alterner entre une configuration de service et une configuration de roue libre dans laquelle ils ont une cylindrée nulle.

4. Véhicule selon l'une des revendications 1 à 3, dans lequel la pompe et le moteur hydraulique sont des appareils hydrauliques à pistons radiaux comprenant chacun un carter, un arbre, une came multilobes et un bloc cylindres, lesdits appareils hydrauliques comprenant chacun deux ensembles mobiles en rotation l'un par rapport à l'autre :
- un premier ensemble défini par le carter, et
- un second ensemble défini par l'arbre, lesdits premier et second ensembles étant libres en rotation l'un par rapport à l'autre,
le bloc cylindres étant monté libre en rotation par rapport auxdits premier et second ensembles la came étant liée en rotation à l'un ou l'autre de ces ensembles, chacun desdits appareils hydrauliques comprenant en outre un actionneur permettant de réaliser de manière sélective une immobilisation du bloc cylindres par rapport à l'autre desdits premier ou second ensembles, de sorte que le bloc cylindres et la came soient chacun liés en rotation à un ensemble distinct, ce qui réalise la mise en service de l'appareil hydraulique.

5. Véhicule selon l'une des revendications 1 à 4, dans lequel lesdits essieux menant et mené forment un ensemble autonome hydrauliquement sans connexion hydraulique avec d'autres sections dudit véhicule à l'exception d'une pompe de gavage.

6. Véhicule selon l'une des revendications 1 à 5, comprenant en outre un essieu directeur mené (50) dans lequel l'essieu mené (60') comprenant le moteur hydraulique (64') est un essieu relevable comprenant un actionneur adapté pour faire varier sa hauteur par rapport au sol.

7. Véhicule selon l'une des revendications 1 à 6, comprenant un essieu menant et N-1 essieux menés avec N entier naturel supérieur ou égal à 2, chacun desdits essieux étant muni d'un appareil hydraulique reliés entre eux de manière à ce que les appareils hydrauliques des essieux menés soient montés en parallèle par rapport à l'appareil hydraulique de l'essieu menant,
lesdits N appareils hydrauliques étant configurés de sorte que
- la cylindrée de l'appareil hydraulique monté sur l'essieu menant soit égale à 1+(NxE) et
- la cylindrée de chacun des appareils hydrauliques des essieux menés soit égale à 1/(N-1),
où E représentant la valeur des pertes et fuites estimées pour un appareil hydraulique monté sur un essieu mené.

8. Véhicule selon l'une des revendications 1 à 7, comprenant en outre un calculateur adapté pour, en fonction des conditions de déplacement du véhicule, définir une valeur seuil telle que lorsque la vitesse de déplacement du véhicule est inférieure ou égale à ladite valeur seuil, le ou les moteur(s) (24) et la ou les pompe(s) (14) hydrauliques soient mis en service de manière à réaliser une assistance hydraulique sur un ou plusieurs essieux du véhicule, et que lorsque la vitesse de déplacement du véhicule est supérieure à ladite valeur seuil, l'assistance hydraulique soient désengagée.

## Patentansprüche

1. Fahrzeug, umfassend ein Fahrgestell, eine führende Achse (10) und eine geführte Achse (20), die jeweils mit Rädern (12, 13, 22, 23) verbunden sind, und einen primären Motor (M), der die führende Achse (10) rotierend antreibt, wobei das Fahrzeug ferner eine Hydraulikpumpe (14) und einen Hydraulikmotor (24) umfasst, die derart konfiguriert sind, dass selektiv eine hydraulische Unterstützung für den Antrieb der Räder (12, 13) der geführten Achse (20) erfolgt,
wobei der Hydraulikmotor (24) und die Hydraulikpumpe (14), die jeweils auf der geführten Achse (20) und auf der führenden Achse (10) montiert sind, jeweils zum einen mit dem Fahrgestell und zum anderen jeweils mit der geführten Achse (20) und der führenden Achse (10) rotierend verbunden sind und derart konfiguriert sind, dass ihre Inbetriebnahme einen Antrieb der Räder der geführten Achse (22, 23) mittels Entnahme des an der führenden Achse (10) anliegenden Moments bewirkt,
wobei die führende Achse (10) ein Differenzial (11) umfasst, das somit zwei Halbachsen definiert, wobei das Differenzial ein Differenzialgehäuse umfasst, das mit Gehäusezahnrädern ausgestattet ist, die ausgebildet sind, um mit Zahnrädern, die jeweils mit einer Ausgangs-Halbachse verbunden sind, zusammenzuwirken, auf denen die Räder montiert sind, wobei die Rotation des Gehäuses erlaubt, die Ausgangs-Halbachsen in unterschiedlichen Geschwindigkeiten anzutreiben, wobei die Pumpe (14) einen Rotor und einen Stator umfasst, wobei der Stator in Bezug auf das Fahrgestell fest montiert ist und der Rotor mit dem Gehäuse des Differenzials (11) rotierend verbunden ist,
**dadurch gekennzeichnet, dass** die Hydraulikpumpe (10) mit einer Geschwindigkeit rotierend angetrieben wird, die der mittleren Geschwindigkeit der beiden Halbachsen entspricht, die dem Differenzial (11) zugeordnet sind, auf dem sie montiert ist, und dass die Hydraulikpumpe (14) und der Hydraulikmotor (24) reversible hydraulische Apparaturen sind.

2. Fahrzeug nach Anspruch 1, wobei die geführte Achse (20) ein Differenzial (21) umfasst, das somit zwei Halbachsen definiert, wobei das Differenzial ein Differenzialgehäuse umfasst, das mit Gehäusezahnrädern ausgestattet ist, die ausgebildet sind, um mit Zahnrädern, die jeweils mit einer Ausgangs-Halbachse verbunden sind, zusammenzuwirken, auf denen die Räder montiert sind, wobei die Rotation des Gehäuses erlaubt, die Ausgangs-Halbachsen in unterschiedlichen Geschwindigkeiten anzutreiben, wobei der Hydraulikmotor (24) einen Rotor und einen Stator umfasst, wobei der Stator in Bezug auf das Fahrgestell fest montiert ist und der Rotor mit dem Gehäuse des Differenzials (21) rotierend verbunden ist,
wobei sowohl jeder der Hydraulikmotoren und jede der Hydraulikpumpen direkt mit dem Differenzialgehäuse ohne Zwischenstellung einer Kupplung verbunden ist.

3. Fahrzeug nach einem der Ansprüche 1 oder 2, wobei die Pumpe und der Hydraulikmotor Hydraulikapparaturen mit einziehbaren radialen Kolben und Mehrflügelnocken sind, die zwischen einer Servicekonfiguration und einer Freilaufkonfiguration, in welcher sie einen Hubraum null haben, alternieren können.

4. Fahrzeug nach einem der Ansprüche 1 bis 3, wobei die Pumpe und der Hydraulikmotor Hydraulikapparaturen mit radialen Kolben sind, die jeweils ein Gehäuse, eine Welle, einen Mehrflügelnocken und einen Zylinderblock umfassen, wobei die Hydraulikapparaturen jeweils zwei in Rotation zueinander bewegbare Einheiten umfassen:
- eine erste Einheit, die von dem Gehäuse definiert ist, und
- eine zweite Einheit, die von der Welle definiert ist, wobei die erste und zweite Einheit in Bezug zueinander frei rotieren,
wobei der Zylinderblock in Bezug zu der ersten und zweiten Einheit frei rotierend montiert ist, wobei der Nocken mit der einen oder der anderen dieser Einheiten rotierend verbunden ist, wobei jede der Hydraulikapparaturen ferner ein Stellglied umfasst, das erlaubt, selektiv eine Blockade des Zylinderblocks in Bezug auf die andere der ersten oder zweiten Einheit durchzuführen, so dass der Zylinderblock und die Welle jeweils mit einer bestimmten Einheit rotierend verbunden sind, was die Inbetriebnahme der Hydraulikapparatur bewirkt.

5. Fahrzeug nach einem der Ansprüche 1 bis 4, wobei die führende und geführte Achse eine hydraulisch autonome Einheit ohne hydraulische Verbindung mit anderen Abschnitten des Fahrzeugs mit Ausnahme einer zusätzlichen Pumpe bilden.

6. Fahrzeug nach einem der Ansprüche 1 bis 5, umfassend ferner eine geführte Lenkachse (50), wobei die geführte Achse (60'), die den Hydraulikmotor (64') umfasst, eine anhebbare Achse ist, die ein Stellglied umfasst, das ausgebildet ist, um ihre Höhe in Bezug zum Boden zu variieren.

7. Fahrzeug nach einem der Ansprüche 1 bis 6, umfassend eine führende Achse und N-1 geführte Achsen mit N als natürliche Ganzzahl größer oder gleich 2, wobei jede der Achsen, die mit einer Hydraulikapparatur ausgestattet sind, derart miteinander verbunden sind, dass die Hydraulikapparaturen der geführten Achsen in Bezug zur Hydraulikapparatur der führenden Achse parallel montiert sind,
wobei die N Hydraulikapparaturen derart konfiguriert sind, dass
- der Hubraum der auf der führenden Achse montierten Hydraulikapparatur gleich 1 + (NxE) ist und
- der Hubraum jeder der Hydraulikapparaturen der geführten Achsen gleich 1/(N-1) ist,
wobei E den Wert der Verluste und Leckagen darstellt, die für eine auf einer geführten Achse montierte Hydraulikapparatur angenommen werden.

8. Fahrzeug nach einem der Ansprüche 1 bis 7, umfassend ferner einen Rechner, der ausgebildet ist, um in Abhängigkeit von den Fahrbedingungen des Fahrzeugs einen Grenzwert derart festzulegen, dass, wenn die Fahrgeschwindigkeit des Fahrzeug unter dem Grenzwert liegt oder diesem entspricht, der oder die Hydraulikmotor(en) (24) und die Hydraulikpumpe(n) (14) derart indienstgestellt werden, dass eine hydraulische Unterstützung auf einer oder mehreren Achsen des Fahrzeugs erfolgt, und dass, wenn die Fahrgeschwindigkeit des Fahrzeugs über dem Grenzwert liegt, die hydraulische Unterstützung freigegeben wird.

## Claims

1. A vehicle comprising a chassis, a driving axle (10) and a driven axle (20) each connected to wheels (12, 13, 22, 23), and a primary motor (M) driving in rotation said driving axle (10), said vehicle further comprising a hydraulic pump (14) and a hydraulic motor (24) configured to selectively provide hydraulic assistance for driving the wheels (12, 13) of the driven axle (20),
said motor (24) and hydraulic pump (14) being respectively mounted on the driven axle (20) and on the driving axle (10), are each connected in rotation on the one hand to the chassis, and on the other hand to said driven (20) and driving (10) axle respectively, and are configured so that their operation provides driving of the wheels of the driven axle (22, 23) by sampling of the torque applied to the driving axle (10),
the driving axle (10) comprising a differential (11) defining two semi-axles, said differential comprising a differential housing fitted with housing pinions adapted to cooperate with pinions each connected to an output semi-axle on which the wheels are mounted, rotation of the housing driving in rotation said output semi-axles at different speeds, the pump (14) comprising a rotor and a stator, the stator being mounted fixed relative to the chassis and the rotor being connected in rotation to the housing of the differential (11),
**characterized in that** the hydraulic pump (10) is driven in rotation at a speed equal to the average speed of the two semi-axles attached to the differential (11) on which it is mounted, and **in that** the hydraulic pump (14) and motor (24) are reversible hydraulic devices.

2. The vehicle according to claim 1, wherein the driven axle (20) comprises a differential (21) defining two semi-axles, said differential comprising a differential housing fitted with housing pinions adapted to cooperate with pinions each connected to an output semi-axle on which the wheels are mounted, rotation of the housing driving in rotation said output semi-axles at different speeds, the hydraulic motor (24) comprising a rotor and a stator, the stator being mounted fixed relative to the chassis and the rotor being connected in rotation to the housing of the differential (21),
each of said motors and hydraulic pumps is connected directly to said differential housing without the intermediary of a clutch.

3. The vehicle according to one of claims 1 or 2, wherein the pump and the hydraulic motor are hydraulic devices with retractable radial pistons and multilobe cam, which can alternate between a service configuration and a free wheel configuration in which they have zero displacement.

4. The vehicle according to one of claims 1 to 3, wherein the pump and the hydraulic motor are hydraulic devices with radial pistons each comprising a casing, a shaft, a multilobe cam and a cylinder block, said hydraulic devices each comprising two assemblies mobile in rotation one relative to the other:
- a first assembly defined by the casing, and
- a second assembly defined by the shaft, said first and second assemblies being free in rotation one relative to the other,
the cylinder block being mounted free in rotation relative to said first and second assemblies, the cam being connected in rotation to one or the other of these assemblies, each of said hydraulic devices further comprising an actuator for selectively producing immobilisation of the cylinder block relative to the other of said first or second assemblies, such that the cylinder block and the cam are each connected in rotation to a separate assembly, which causes the operation of the hydraulic device.

5. The vehicle according to one of claims 1 to 4, wherein said driving and driven axles form a hydraulically autonomous assembly without hydraulic connection with other sections of said vehicle with the exception of a booster pump.

6. The vehicle according to one of claims 1 to 5, further comprising a driven directive axle (50) wherein the driven axle (60') comprising the hydraulic motor (64') is an adjustable axle comprising an actuator adapted to vary its height relative to the ground.

7. The vehicle according to one of claims 1 to 6, comprising a driving axle and N-1 driven axles, with N being a natural whole number greater than or equal to 2, each of said axles being fitted with a hydraulic device connected together so that the hydraulic devices of the driven axles are mounted in parallel relative to the hydraulic device of the driving axle,
said N hydraulic devices being configured such that
- displacement of the hydraulic device mounted on the driving axle is equal to 1+(N×E) and
- displacement of each of the hydraulic devices of the driven axles is equal to 1/(N-1),
where E representing the value of the estimated losses and leaks for a hydraulic device mounted on a driven axle.

8. The vehicle according to one of claims 1 to 7, further comprising a computer adapted, as a function of the conditions of travel of the vehicle, to define a threshold value such that when the travel speed of the vehicle is less than or equal to said threshold value, the motor (s) (24) and the hydraulic pump(s) (14) are put into service so as to produce hydraulic assistance on one or more axles of the vehicle, and when the travel speed of the vehicle is greater than said threshold value, the hydraulic assistance is disengaged.
